# EUROPEAN PATENT SPECIFICATION

(11) **EP 2 634 418 B1**
(45) Date of publication and mention of the grant of the patent: **31.03.2021**
(21) Application number: 13154818.2
(22) Date of filing: 11.02.2013
(51) Int. Cl.: F03D 1/06

(54) **Blade insert for a wind turbine rotor blade and related methods**
Rotorblatteinsatz für ein Windturbinenrotorblatt und zugehöriges Verfahren
Insert de lame pour pale de rotor de turbine éolienne et procédés associés

(30) Priority: 29.02.2012 IN DE05722012
(43) Date of publication of application: 04.09.2013
(73) Proprietor: General Electric Company, Schenectady, NY 12345 (US)
(72) Inventor: Busbey, Bruce Clark, Greenville, SC South Carolina 29615 (US); Vedula, Ramesh, 560066 Bangalore (IN); Herr, Stefan, Greenville, SC South Carolina 29615 (US); Murugappan, Revathy, 560066 Bangalore (IN); Balusu, Satish, 560066 Bangalore (IN); Fischetti, Thomas Joseph, Greenville, SC South Carolina 29615 (US)
(74) Representative: ZBM Patents - Zea, Barlocci & Markvardsen

(56) References cited:
- EP-A1- 1 761 702
- EP-A1- 2 631 478
- ES-A1- 2 343 712
- FR-A1- 2 937 689
- US-A1- 2010 135 814
- US-A1- 2011 223 034
- US-A1- 2011 243 736

## Description

The present subject matter relates generally to wind turbines and, more particularly, to a blade insert for extending the length of a wind turbine rotor blade and related methods.

Wind power is considered one of the cleanest, most environmentally friendly energy sources presently available, and wind turbines have gained increased attention in this regard. A modern wind turbine typically includes a tower, generator, gearbox, nacelle, and one or more turbine blades. The turbine blades capture kinetic energy from wind using known foil principles and transmit the kinetic energy through rotational energy to turn a shaft coupling the rotor blades to a gearbox, or if a gearbox is not used, directly to the generator. The generator then converts the mechanical energy to electrical energy that may be deployed to a utility grid.

To ensure that wind power remains a viable energy source, efforts have been made to increase energy outputs by modifying the size and capacity of wind turbines. See US 2011/0243736, for example. One such modification has been to increase the length of the rotor blades. However, as is generally known, the deflection of a rotor blade is a function of blade length, along with wind speed, turbine operating states and blade stiffness. Thus, longer rotor blades may be subject to increased deflection forces, particularly when a wind turbine is operating in high-speed wind conditions. These increased deflection forces not only produce fatigue on the rotor blades and other wind turbine components but may also increase the risk of the rotor blades striking the tower.

In order to increase the length of wind turbine rotor blades without adversely affecting the aerodynamic design, it is known to install tip extensions onto the blades. Typically, a conventional tip extension is installed onto a rotor blade by cutting-off a portion of the blade at its tip and replacing such cut-off portion with the tip extension. However, due to the fact that a portion of the rotor blade must be cut-off and because the elongated rotor blade will be subjected to increased loads, the tip extension must be significantly longer than the actual increase in rotor blade length that can be achieved by installing the extension. For example, a conventional tip extension may often need to have a length of almost half of the original span of the rotor blade to accommodate the increased loading on the blade. As such, due to their length, the costs of manufacturing and transporting conventional tip extensions can be prohibitively expensive.

Accordingly, a blade insert that can be used to increase the span of a rotor blade by an amount generally corresponding to the overall length of the blade insert would be welcomed in the technology.

FR2937689A1 and ES2343712A1 relate to transport and assembly methods of segmented wind turbine blades, while EP1761702A1 shows a method of joining wind turbine blade segments with a scarf joint.

Various aspects and advantages of the invention, which is defined by the appended claims, will be set forth in part in the following description, or may be clear from the description, or may be learned through practice of the invention.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
FIG. 1 illustrates a perspective view of one embodiment of a wind turbine;
FIG. 2 illustrates a perspective view of one embodiment of a rotor blade of a wind turbine;
FIG. 3 illustrates a perspective, exploded view of one embodiment of a rotor blade assembly in accordance with aspects of the present subject matter;
FIG. 4 illustrates a partial, side assembled view of the rotor blade assembly shown in FIG. 3;
FIG. 5 illustrates a cross-sectional view of the rotor blade assembly shown in FIG. 4 taken about line 5-5;
FIG. 6 illustrates an edge view of the rotor blade assembly shown in FIG. 4 viewing the rotor blade assembly from line 6-6;
FIG. 7 illustrates a perspective view of one embodiment of attachment features that may be utilized to couple the components of the rotor blade assembly to one another;
FIG. 8 illustrates an assembled, cross-sectional view of the components shown in FIG. 7;
FIG. 9 illustrates an assembled, cross-sectional view of different attachment features that may be utilized to couple the components of the rotor blade assembly to one another;
FIG. 10 illustrates a perspective, exploded view of another embodiment of a rotor blade assembly in accordance with aspects of the present subject matter;
FIG. 11 illustrates a partial, side assembled view of the rotor blade assembly shown in FIG. 10;
FIG. 12 illustrates a partial, side assembly view of another embodiment of a rotor blade assembly in accordance with aspects of the present subject matter;
FIG. 13 illustrates a partial, side assembly view of a further embodiment of a rotor blade assembly in accordance with aspects of the present subject matter;
FIG. 14 illustrates a partial, side assembly view of yet another embodiment of a rotor blade assembly in accordance with aspects of the present subject matter; and
FIG. 15 illustrates a partial, side assembled view of one embodiment of a rotor blade assembly in which the blade insert is swept.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

In general, the present subject matter is directed to a blade insert for extending the length of a wind turbine rotor blade. For example, in several embodiments, a pre-existing rotor blade may be divided into two blade segments, such as by cutting the pre-existing rotor blade at a specified location along its span. A blade insert may then be coupled between the blade segments in order to increase the overall length of the pre-existing rotor blade.

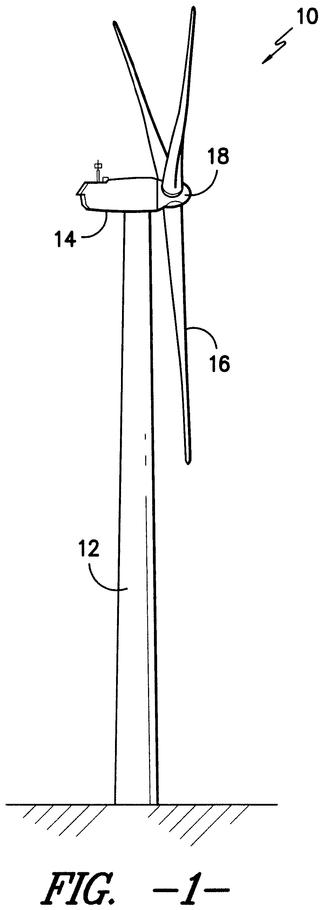

Referring now to the drawings, FIG. 1 illustrates perspective view of one embodiment of a wind turbine 10. The wind turbine 10 includes a tower 12 with a nacelle 14 mounted thereon. A plurality of rotor blades 16 are mounted to a rotor hub 18, which is, in turn, connected to a main flange that turns a main rotor shaft. The wind turbine power generation and control components (e.g., a turbine controller) may be housed within the nacelle 14. It should be appreciated that the view of FIG. 1 is provided for illustrative purposes only to place the present subject matter in an exemplary field of use. Thus, one of ordinary skill in the art should readily appreciate that the present subject matter need not be limited to any particular type of wind turbine configuration.

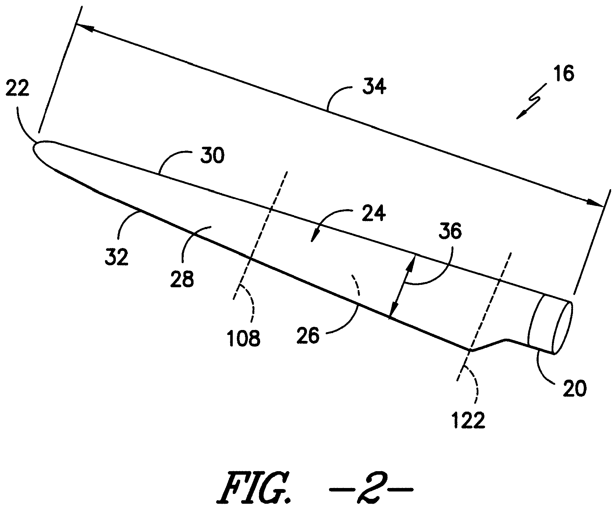

Referring now to FIG. 2, a perspective view of one embodiment of one of the rotor blades 16 shown in FIG. 1 is illustrated. As shown, the rotor blade 16 generally includes a blade root 20 configured for mounting the rotor blade 16 to the hub 18 of the wind turbine 10 (FIG. 1) and a blade tip 22 disposed opposite the blade root 20. A body 24 of the rotor blade 16 may generally be configured to extend between the blade root 20 and the blade tip 22 and may serve as the outer casing/skin of the blade 16. In several embodiments, the body 24 may define a substantially aerodynamic profile, such as by defining a symmetrical or cambered airfoil-shaped cross-section. As such, the body 24 may include a pressure side 26 and a suction side 28 extending between a leading edge 30 and a trailing edge 32. Further, the rotor blade 16 may have a span 34 defining the total length between the blade root 20 and the blade tip 22 and a chord 36 defining the total length between the leading edge 30 and the trialing edge 32. As is generally understood, the chord 36 may vary in length with respect to the span 34 as the rotor blade 16 extends from the blade root 20 to the blade tip 22.

In several embodiments, the body 24 of the rotor blade 16 may be formed as a single, unitary component. Alternatively, the body 24 may be formed from a plurality of shell components. For example, the body 24 may be manufactured from a first shell half generally defining the pressure side 26 of the rotor blade 16 and a second shell half generally defining the suction side 28 of the rotor blade 16, with the shell halves being secured to one another at the leading and trailing edges 30, 32 of the blade 16. Additionally, the body 24 may generally be formed from any suitable material. For instance, in one embodiment, the body 24 may be formed entirely from a laminate composite material, such as a carbon fiber reinforced laminate composite or a glass fiber reinforced laminate composite. Alternatively, one or more portions of the body 24 may be configured as a layered construction and may include a core material, formed from a lightweight material such as wood (e.g., balsa), foam (e.g., extruded polystyrene foam) or a combination of such materials, disposed between layers of laminate composite material.

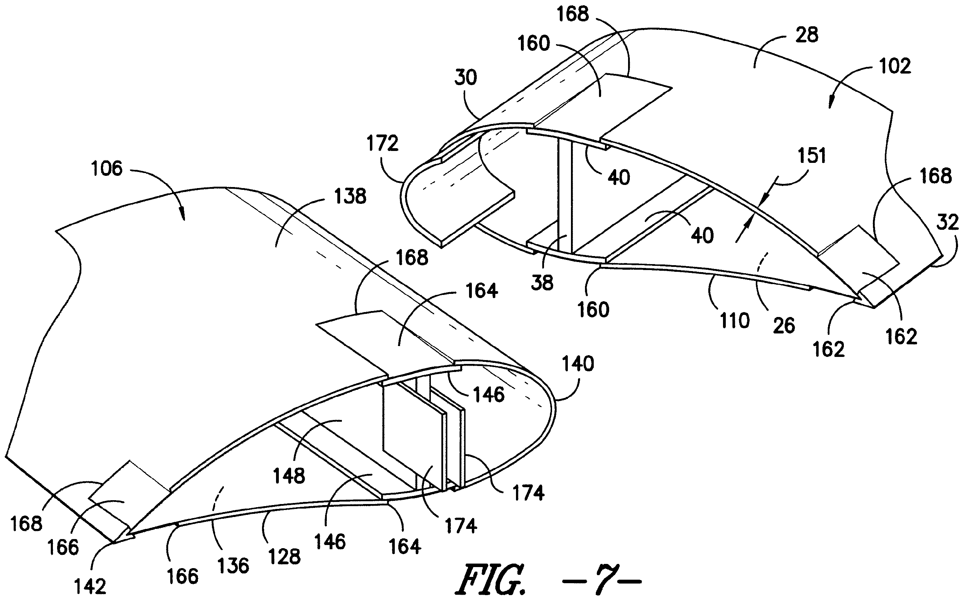

It should be appreciated that the rotor blade 16 may also include one or more longitudinally extending structural components configured to provide increased stiffness, buckling resistance and/or strength to the rotor blade 16. For example, in several embodiments, the rotor blade 16 may include one or more shear webs 38 (FIG. 7) extending between corresponding spar caps 40 (FIG. 7). However, in other embodiments, the rotor blade 16 of the present disclosure may have any other suitable internal configuration.

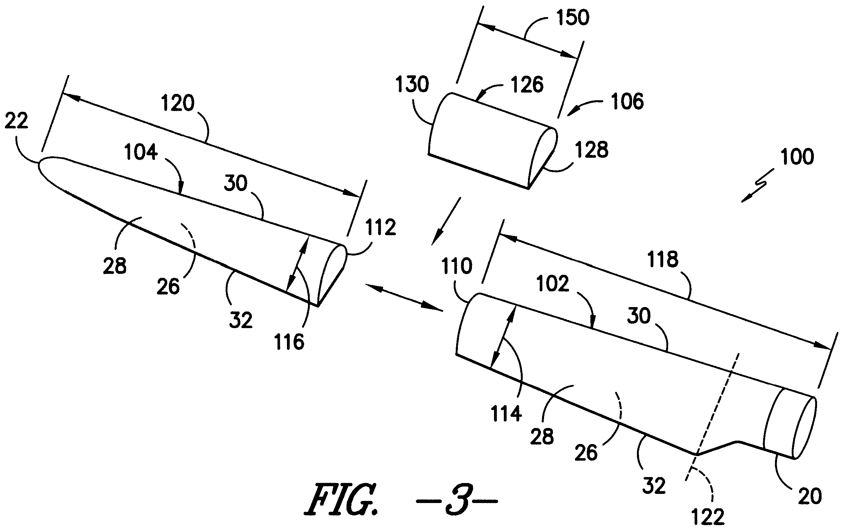

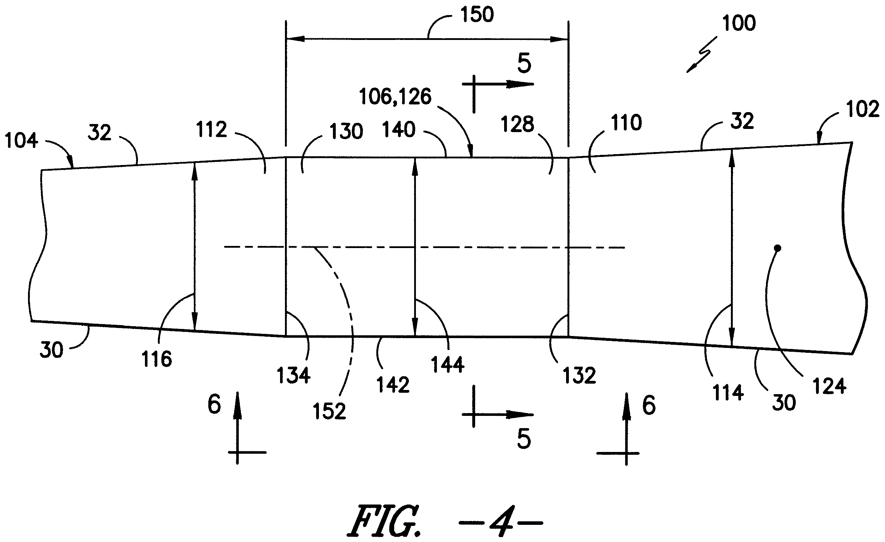

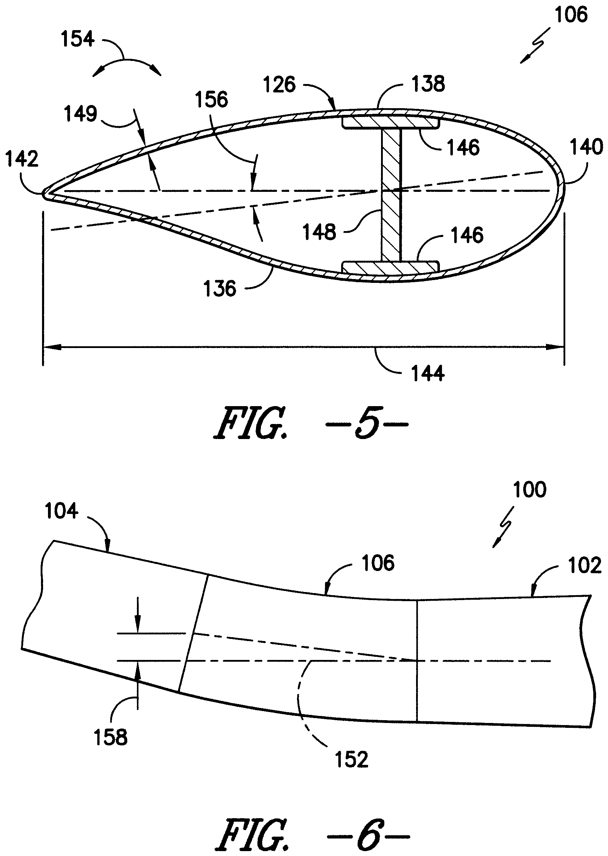

Referring now to FIGS. 3-6, one embodiment of a rotor blade assembly 100 is illustrated in accordance with aspects of the present subject matter. Specifically, FIG. 3 illustrates a perspective, exploded view of the rotor blade assembly 100. FIG. 4 illustrates a partial, pressure side view of the rotor blade assembly 100. FIG. 5 illustrates a cross-sectional view of the rotor blade assembly 100 shown in FIG. 4 taken about line 5-5. Additionally, FIG. 6 illustrates a leading edge view of the rotor blade assembly 100 shown in FIG. 4.

As shown, the rotor blade assembly 100 may include a first blade segment 102, a second blade segment 104 and a blade insert 106 configured to be coupled between the first and second blade segments 102, 104. In general, the rotor blade assembly 100 may be configured such that, when the first and second blade segments 102, 104 are coupled together via the blade insert 106, a complete rotor blade is formed.

In several embodiments, the first and second blade segments 102, 104 may be formed by dividing a pre-existing rotor blade 16 into two separate blade sections. For example, as shown in FIG. 2, in one embodiment, the illustrated rotor blade 16 may be divided into the first and second blade segments 102, 104 by cutting the rotor blade 16 along a joint or cut line 108. Thus, the first blade segment 102 may generally comprise a root segment of the rotor blade 16 and may extend between the blade root 20 and a first joint end 110 formed at the cut line 108. Similarly, the second blade segment 104 may comprise a tip segment of the rotor blade 16 and may extend between the blade tip 22 and a second joint end 112 formed at the cut line 108. In such an embodiment, each blade segment 102, 104 may generally define a chord 114, 116 corresponding to the total length of each segment between its leading and trailing edges 30, 32. For example, as shown in FIGS. 3 and 4, the first blade segment 102 may define a first chord 114 and the second blade segment 104 may define a second chord 116, with the first chord 114 at the first joint end 110 being the same as or substantially the same as the second chord 116 at the second joint end 112.

By dividing a pre-existing rotor blade 16 as described above, the total length of the first and second blade segments 102, 104 may generally correspond to the original span 34 of the rotor blade 16. Specifically, the first blade segment 102 may define a first spanwise length 118 and the second blade segment 104 may define a second spanwise length 120 such that, when combined, the first and second spanwise lengths 118, 120 define a total segment length that is equal or substantially equal to the original span 34. As used herein, the term "total segment length" will be used to refer to the combined length of the first and second spanwise lengths 118, 120.

It should be appreciated that the first and second spanwise lengths 118, 120 may generally vary depending on the location of the cut line 108. Thus, in several embodiments, the location of the cut line 108 may be selected in order to provide spanwise lengths 118, 120 for the first and second blade segments 102, 104 that permit the blade insert 106 to be positioned along the length of the rotor blade assembly 100 at a location that enhances the overall performance of the assembly 100 while minimizing performance impacts (e.g., deflection, moment of inertia, etc.). For example, in one embodiment, the location of the cut line 108 along the rotor blade 16 may be selected such that the first spanwise length 118 ranges from about 40% to about 95% of the total segment length, such as from about 40% to about 80% of the total segment length or from about 50% to about 65% of the total segment length. However, it is foreseeable that, in other embodiments, the location of the cut line 108 may be selected such that the first spanwise length 118 is less then 40% of the total segment length or greater than 95% of the total segment length.

In other embodiments, the location of the cut line 108 may be selected such that the rotor blade 16 is divided outboard of its maximum chord location. For example, as shown in FIGS. 2 and 3, the rotor blade 16 may be divided such that the maximum chord location 122 is included within the first blade segment 102. In a further embodiment, the location of the cut line 108 may be selected such that, when the blade insert 106 is coupled between the first and second blade segments 102, 104, a center of gravity 124 of the rotor blade assembly 100 is defined within the first blade segment 102.

It should be appreciated that, in alternative embodiments, the first and second blade segments 102, 104 need not be formed by cutting or otherwise dividing a pre-existing rotor blade 16 into two separate blade sections. For example, in another embodiment, the first and second blade segments 102, 104 may be separately manufactured and assembled together with the blade insert 106 to form the disclosed rotor blade assembly 100.

Additionally, it should be appreciated that, as used herein, the terms "first blade segment" and "second blade segment" need not be limited to a single, continuous blade segment. For example, the first blade segment 102 may be formed from a single, unitary blade segment extending between the blade root 20 and the first joint end 110 or the first blade segment 102 may be formed from two or more blade segments that, when coupled together, extend between blade root 20 and the first joint end 110. Similarly, the second blade segment 104 may be formed from a single, unitary blade segment extending between the second joint end 112 and the blade tip 22 or the second blade segment 104 may be formed from two or more blade segments that, when coupled together, extend between the second joint end 112 and the blade tip 22. Moreover, it should be appreciated that, in alternative embodiments, the rotor blade assembly 100 may be divided into three or more blade segment, with a blade insert 106 being coupled between each pair of adjacent blade segments.

Referring still to FIGS. 3-6, the blade insert 106 of the rotor blade assembly 100 may generally comprise an elongated body 126 extending between a first end 128 and a second end 130. In general, the blade insert 106 may be configured to be coupled between the first and second blade segments 102, 104 in order to form the rotor blade assembly 100. Specifically, as shown in FIG. 4, the first end 128 of the body 126 may be configured to be coupled to the joint end 110 of the first blade segment 102 such that a first interface 132 is defined between the blade insert 106 and the first blade segment 102. Similarly, the second end 130 of the body 126 may be configured to be coupled to the joint end 112 of the second blade segment 104 such that a second interface 134 is defined between the blade insert 106 and the second blade segment 104.

The body 126 of the blade insert 106 may also be configured to define a substantially aerodynamic profile, such as by defining a symmetric or cambered airfoil-shaped cross-section. Thus, as particularly shown in FIG. 5, in several embodiments, the body 126 may include a pressure side 136 and a suction side 138 extending between a leading edge 140 and a trailing edge 142. In addition, the body 126 may also define a chord 144 corresponding to the overall length of the blade insert 106 between its leading and trailing edges 140, 142.

Moreover, in several embodiments, the blade insert 106 may also include the same or similar internal structural components as the first and second blade segments 102, 104. For example, as shown in FIG. 5, the blade insert 106 may include a pair of longitudinally extending spar caps 146 configured to be aligned with the longitudinally extending spar caps 40 (FIG. 7) of the blade segments 102, 104. In such an embodiment, the blade insert 106 may also include one or more shear webs 148 extending between the spar caps 146 that generally correspond to the shear web(s) 38 of the blade segments 102, 104. However, it should be appreciated that, in alternative embodiments, the blade insert 106 may include internal structural components that differ from the internal structural components of the blade segments 102, 104.

Referring still to FIGS. 3-6, in several embodiments, the cross-section of the blade insert 106 at its first and second ends 128, 130 may generally be configured to correspond to or otherwise match the cross-sections of the first and second blade segments 102, 104 at their joint ends 110, 112. Thus, in embodiments in which the blade segments 102, 104 are formed by cutting or otherwise dividing a pre-exiting rotor blade 16 at the cut line 108, the cross-section of the insert body 126 at the first interface 132 may be the same as or substantially the same as the cross-section of the body 126 at the second interface 134. For example, in several embodiments, the chord 144 of the blade insert 106 at the first interface 132 may be the same as or substantially the same as the chord 144 at the second interface 134. Similarly, the aerodynamic profile/shape of the blade insert 106 at the first interface 132 may be the same as or substantially the same as the aerodynamic profile/shape of the blade insert 106 at the second interface 134. As such, when the blade insert 106 is coupled between the first and second blade segments 102, 104, a smooth, substantially continuous aerodynamic surface may be defined across the first and second interfaces 132, 134.

Additionally, in several embodiments, the blade insert 106 may be configured to define a constant or varied cross-section between the first and second interfaces 132, 134. For example, as shown in the illustrated embodiment, the blade insert 106 may be configured such that the body 126 defines a constant or substantially constant cross-section between the first and second interfaces 132, 134 (e.g., by defining both a substantially constant chord 144 and aerodynamic profile/shape between the first and second interfaces 132, 134). However, in other embodiments, the chord 144 and/or aerodynamic profile/shape of the blade insert 106 may be varied between the first and second interfaces 132, 134. For instance, it may be desirable for the blade insert 106 to define an aerodynamic profile/shape between the first and second interfaces 132, 134 that differs from the aerodynamic profile/shape of the first and/or second blade segment 102, 104.

Moreover, the blade insert 106 may also define a body thickness 149. For example, as shown in FIGS. 5, 8 and 9, a body thickness 149 may be defined between the inner and outer surfaces of the body 126 of the blade insert 106. Similarly, the first and second blade segments 102, 104 may also define a body thickness 151. For instance, as shown in FIGS. 7-9, the first blade segment 102 may define a body thickness 151 between its inner and outer surfaces. In several embodiments, the body thickness 149 of the blade insert 106 may be the same as or substantially the same as the body thickness 151 of the first and/or second blade segments at their joint ends 110, 112. Thus, in embodiments in which the blade insert 106 comprises a pre-fabricated component, the location of the cut line 108 may be selected so as to correspond to the location along the span 34 of the blade 16 at which its body thickness 151 is equal or substantially equal to the body thickness 149 of the blade insert 106. However, it should be appreciated that, in alternative embodiments, the body thickness 149 of the blade insert 106 may differ from the body thickness 151 of the first and/or second blade segments 102, 104 at its(their) joint ends 110, 112. For instance, it may be desirable, in one embodiment, for the body thickness 149 of the blade insert 106 to be greater than the body thickness 151 of both the first and second blade segments 102, 104 at their joint ends 110, 112. Alternatively, the body thickness 149 of the blade insert 106 may be less than the body thickness 151 of both the first and second blade segments 102, 104 at their joint ends 110, 112.

The body 126 of the blade insert 106 may also define a spanwise length 150 along a longitudinal axis 152 extending between its first and second ends 128, 130. In general, the spanwise length 150 of the body 126 may be selected to provide the rotor blade assembly 100 increased efficiency (i.e., due to the overall increase in span) while taking into consideration relevant performance factors and/or operating conditions, such as the potential increases in deflection, thrust and/or torque that may result from the increased span. Thus, in several embodiments, the spanwise length 150 of the blade insert 106 may range from about 1 meter (m) to about 20 meters, such as from about 3 m to about 12 m or from about 5 m to about 8 m and all other subranges therbetween. However, it is foreseeable that the blade insert 106 may be configured such that its length 150 is less than 1 m or greater than 20 meters.

Additionally, in several embodiments, at least a portion of the blade insert 106 may be twisted about its longitudinal axis 152 (FIGS. 4 and 6). For example, as shown in FIG. 5, in one embodiment, the body 126 of the blade insert 106 may be twisted about its longitudinal axis 152 (e.g., in the direction of arrow 154) such that the orientation of the chord 144 at the first interface 132 differs from the orientation of the chord 144 at the second interface 134 by a twist angle 156. Such twisting may allow for the angle of attack of the rotor blade assembly 100 to be optimized, thereby increased its overall performance.

Moreover, in several embodiments, at least a portion of the blade insert 106 may be curved relative to its longitudinal axis 152. For example, as shown in FIG. 6, the body 126 of the blade insert 106 may be curved relative to its longitudinal axis 152 such that the blade insert 106 defines an amount of pre-bend 158 between the first and second interfaces 132, 134. Such pre-bend 158 may be utilized to angle the rotor blade assembly 100 away from the tower 12 of a wind turbine 10 (FIG. 1), thereby increasing the tower clearance and decreasing the likelihood of a tower strike.

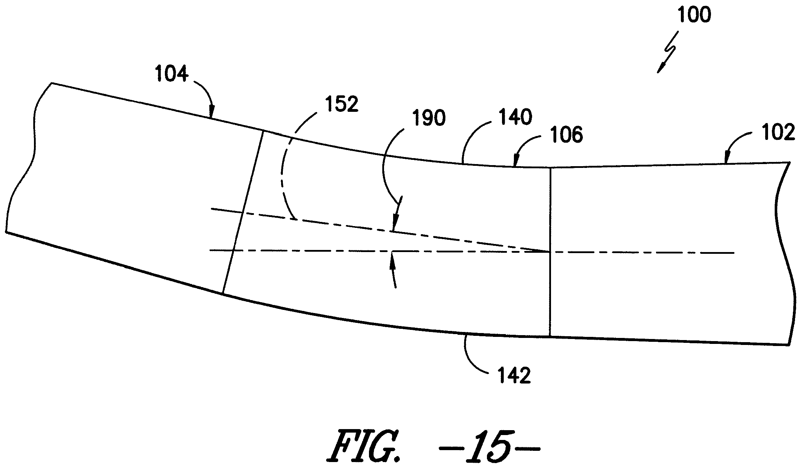

In addition, or as an alternative, to being pre-bent, the blade insert 106 may also be curved or swept in the chordwise direction (i.e., the direction extending between the leading and trailing edges 140, 142 of the blade insert 102). For example, as shown in FIG. 15, the blade insert 106 may be swept such that a sweep angle 190 is defined between the longitudinal axis 152 of the blade insert 106 and the longitudinal axis of the first blade segment 102. Such sweeping of the blade insert 106 may be utilized to lower the pitching or torque load on the pitch system of the rotor blade assembly 100 or to help reduce overall loading on the wind turbine.

Further, in addition to defining an aerodynamic profile/shape, the blade insert 106 may also be configured to include various other aerodynamic features (not shown). For instance, in several embodiments, the blade insert 106 may include one or more spoilers, vortex generators and/or other aerodynamic surface features. In another embodiment, the blade insert 106 may include one or more auxiliary airfoils mounted to the body 126.

It should be appreciated that the blade insert 106 may generally be formed from any suitable material(s), such as by being formed from the same material(s) used to form the first and second blade segments 102, 104. However, in several embodiments, it may be desirable to form at least a portion of the blade insert 106 from a material(s) having a greater stiffness (e.g., a greater flexural rigidity) than the material(s) used to form the first and second blade segments 102, 104. For example, in one embodiment, one or more of the spar caps 146 of the blade insert 106 may be formed from a material(s) having a greater stiffness than the material(s) used to form the first and second blade segments 102, 104, such as by forming the spar cap(s) 146 from a fiber-reinforced composite material(s) (e.g., a carbon or glass fiber reinforced composite) that has a greater stiffness than the fiber-reinforced composite material(s) used to form the blade segments 102, 104. Thus, the stiffness of the blade insert 106 may be configured to be greater than the stiffness of the first blade segment 102 at its joint end 110 and/or the stiffness of the second blade segment 104 at its joint end 112. Such increased stiffness may generally increase the rigidity of the rotor blade assembly 100 and may also decrease the tip deflection of the assembly 100.

Additionally, in several embodiments, the material(s) and/or configuration of the blade insert 106 may be designed such that the insert 106 has a constant or substantially constant stiffness or flexural rigidity (EI) along its length 150. Moreover, in one embodiment, the blade insert 106 may be designed such that its flexural rigidity is substantially equal to the flexural rigidity of the first blade segment 102 at its joint end 110 and/or the second blade segment 104 at its joint end 112.

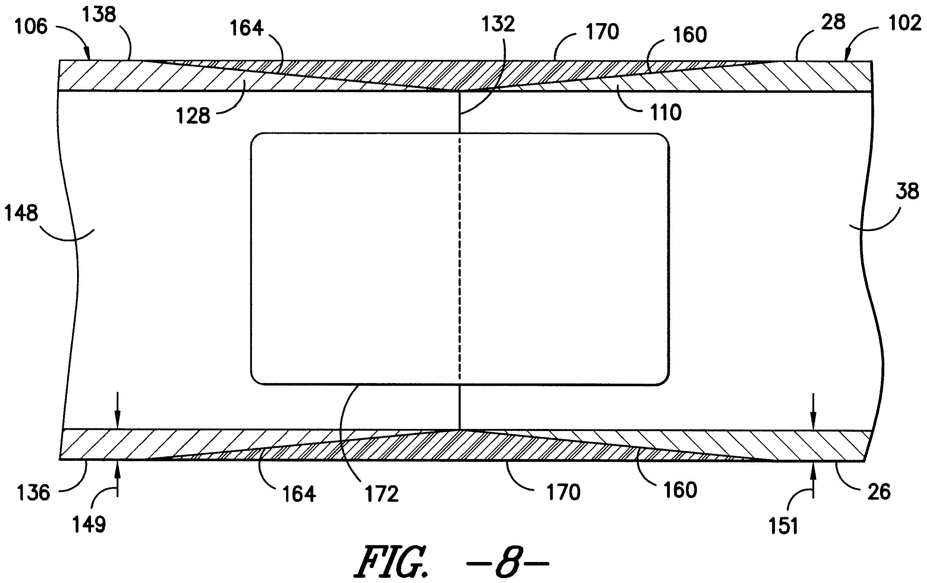

Moreover, it should be appreciated that the blade insert 106 may generally be configured to be coupled to first and second blade segments 102, 104 using any suitable attachment means and/or method known in the art. For example, FIGS. 7 and 8 illustrate one embodiment of an attachment means/method that may be utilized to attach the blade insert 106 to the joint ends 110, 112 of the first and second blade segments 102, 104. In particular, FIG. 7 illustrates a partial, perspective view of the joint end 110 of the first blade segment 102 and the first end 128 of the blade insert 106. Additionally, FIG. 8 illustrates a cross-sectional view of the blade segment 102 and blade insert 106 shown in FIG. 7 after such components have been assembled together. It should be appreciated that, although FIGS. 7 and 8 will be described below with reference to forming a joint at the first interface 132 defined between the first blade segment 102 and the blade insert 106, the same or similar features, components and/or configuration may also be utilized to form a joint at the second interface 134 defined between the second blade segment 104 and the blade insert 106. As shown, in several embodiments, the blade insert 106 may be coupled to the first blade segment 102 by forming a scarf joint at the first interface 132. Specifically, one or more tapered or scarfed sections 160, 162, 164, 166 may be formed along the outer perimeter of the first blade segment 102 at its joint end 110 and along the outer perimeter of the blade insert 106 at its first end 128. For example, as particularly shown in FIG. 7, scarfed sections 160, 162 may be formed at the first joint end 110 along the pressure and/or suction sides 26, 28 of the first blade segment 102, such as by forming a scarfed section 160 at a spar cap location on the pressure and/or suction sides 26, 28 of the first joint end 110 (e.g., by forming the scarfed section(s) 160 so as to be aligned longitudinally with each spar cap 40 of the blade segment 102) and/or by forming a scarfed section 162 at a trailing edge location on the pressure and/or suction sides 26, 28 of the first joint end 110 (e.g., by forming the scarfed section(s) 162 at a location substantially adjacent to the trailing edge 32 of the blade segment 102). In such an embodiment, corresponding scarfed sections 164, 166 may also be formed at the first end 128 of the blade insert 106, such as by forming a scarfed section 164 at a spar cap location on the pressure and/or suction sides 136, 138 of the first end 128 that corresponds to the scarfed section(s) 160 formed in the blade segment 102 and/or by forming a scarfed section 166 at a trailing edge location on the pressure and/or suction sides 136, 138 of the first end 128 that corresponds to the scarfed section(s) 162 formed in the blade segment 102. As such, the scarfed section(s) 160, 162 formed at the joint end 110 of the blade segment 102 may be aligned with the scarfed section(s) 164, 166 formed at the end 128 of the blade insert 106 when the blade segment 102 and blade insert 106 are assembled together.

It should be appreciated that, that although the illustrated embodiment show the blade segment 102 and the blade insert 106 as each including a pair of scarfed sections 160, 162, 164, 166 at both the spar cap and trailing edge locations, the blade segment 110 and blade insert 106 may generally include any number of scarfed sections formed at any suitable location along the outer circumference of the ends 110, 128 of such components. For example, in one embodiment, the blade segment 102 and the blade insert 106 may be scarfed around the entire outer circumference of their ends 110, 128.

It should also be appreciated that the scarfed sections 160, 162, 164, 166 may generally be formed using any suitable manufacturing process known in the art. For example, in several embodiments, a grinding, cutting or other machining process may be used to remove material along the outer circumference of the blade segment 102 and the blade insert 106 such that each scarfed section 160, 162, 164, 166 tapers from a transition point 168 to the end 110, 128 of the blade segment 102 or blade insert 106.

As particularly shown in FIG. 8, when the blade segment 102 and blade insert 106 are positioned together such that the corresponding scarfed sections 160, 162, 164, 166 are aligned with one another, a tapered coupling 170 may be secured across each pair of aligned scarfed sections 160, 162, 164, 166 in order to couple the blade insert 106 to the blade segment 102. Specifically, as shown, each tapered coupling 170 may be configured to extend across the interface 132 defined between the blade segment 102 and the blade insert 106 so as to fill the area defined by the aligned scarfed sections 106, 162, 164.

In several embodiments, each tapered coupling 170 may comprise a pre-fabricated component configured to be separately secured within each pair of aligned scarfed sections 160, 162, 164, 166, such as by securing each tapered coupling 170 within each pair of aligned scarfed sections 160, 162, 164, 166 using suitable adhesives and/or mechanical fasteners (e.g., bolts, screws, pins, rivets, brackets and/or the like). Alternatively, each tapered coupling 170 may be formed or otherwise built-up within each pair of aligned scarfed sections 160, 162, 164, 166. For instance, in one embodiment, each tapered coupling 170 may be formed using a wet lay-up process, wherein a plurality of plies (including a reinforcement material such as glass or carbon fibers) are positioned across and/or within the aligned scarfed sections 160, 162, 164, 166 and a resin or other suitable matrix material is rolled over or otherwise applied to the surface of the plies and allowed to cure.

Additionally, in several embodiments, the rotor blade assembly 100 may also include various other structural components to enhance the strength of the joints formed between the blade segments 102, 104 and the blade insert 106. For example, as shown in FIG. 7, in one embodiment, a leading edge insert 172 may be installed across the first interface 132 and/or the second interface 134 at the leading edges 30, 140 of the blade segment(s) 102, 104 and the blade insert 106. Specifically, as shown, the leading edge insert 172 may define a curved profile generally corresponding to the curved profiles of the leading edges 30, 140 of the blade segment(s) 102, 104 and the blade insert 106. As such, the leading edge insert 172 may be secured across the first interface 132 and/or the second interface 134 by coupling the insert 172 to the inner surfaces of the blade segments 102, 104 and the blade insert 106 using suitable adhesives and/or mechanical fasteners.

Moreover, the rotor blade assembly 100 also includes one or more shear web couplings 174 configured to be secured to the shear webs 38, 148 of blade segments 102, 104 and the blade insert 106. For example, as shown in FIGS. 7 and 8, first and second shear web couplings 174 may be secured to each side of the shear webs 38, 148 (e.g., using a suitable adhesive and/or mechanical fasteners) so as to extend across the first and/or second interface 132, 134.

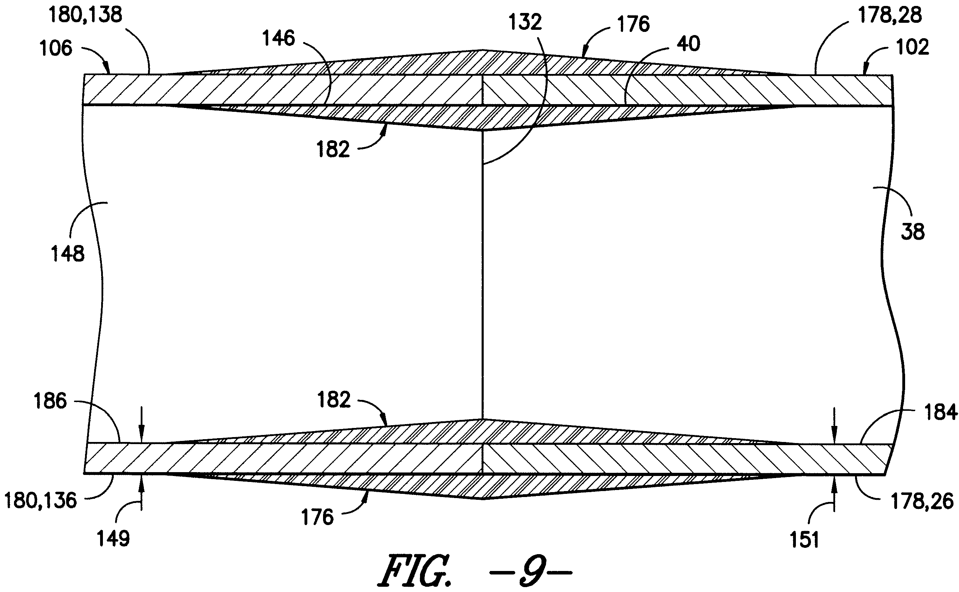

As an alternative to forming the scarf joint described above, it should be appreciated that any other suitable joint configuration may be used to couple the blade insert 106 to the first and second blade segments 102, 104. For example, FIG. 9 illustrates a cross-sectional view of one embodiment of a doubler joint that may be formed at the interfaces 132, 134 defined between the blade insert 106 and the first and second blade segments 102, 104. Similar to the embodiment described above, it should be appreciated that, although FIG. 9 will be described below with reference to forming a joint at the first interface 132 defined between the first blade segment 102 and the blade insert 106, the same or similar features, components and/or configuration may also be utilized to form a joint at the second interface 134 defined between the second blade segment 104 and the blade insert 106.

As shown in FIG. 9, in several embodiments, one or more outer doublers 176 may be secured to an outer surface 178 of the blade segment 102 and an outer surface 180 of the blade insert 106 so as to extend across the first interface 132, such as by securing one or more outer doublers 176 across the interface 132 on the suction sides 28, 138 of the blade segment 102 and the blade insert 106 and/or by securing one or more outer doublers 176 across the interface 132 on the pressure sides 26, 138 of the blade segment 102 and the blade insert 106. In such embodiments, it should be appreciated that the outer doublers 176 may generally be positioned at any suitable location around the outer circumference of the interface 132. However, in a particular embodiment, the outer doublers 176 may be secured across the interface 132 at a spar cap location of the blade segment 102 and the blade insert 106 such that the outer doublers 176 are longitudinally aligned with the spar caps 40, 146.

Additionally, as shown in FIG. 9, one or more inner doublers 182 may be secured to an inner surface 184 of the blade segment 102 and an inner surface 186 of the blade insert 106 so as to extend across the first interface 132, such as by securing one or more inner doublers 182 across the interface 132 on the suction sides 28, 138 of the blade segment 102 and the blade insert 106 and/or by securing one or more inner doublers 182 across the interface 132 on the pressure sides 26, 136 of the blade segment 102 and the blade insert 105. Similar to the outer doublers 176, the inner doublers 182 may generally be positioned at any suitable location around the inner circumference of the interface 132. For example, in a particular embodiment, a pair of inner doublers 182 (one of which is shown) may be secured across the interface 132 so as to extend longitudinally adjacent to the sides of the shear webs 38, 148 on both the pressure and suction sides 26, 28, 136, 138 of the blade segment 102 and the blade insert 106.

It should be appreciated that the doublers 176, 182 may generally have any suitable configuration that permits such components to function as described herein. For example, in one embodiment, the doublers 176, 182 may have a tapered configuration. In such an embodiment, as shown in FIG. 9, each doubler 176, 182 may generally define a triangular cross-sectional shape, with the cross-sectional thickness of the doublers 176, 182 increasing towards the interface 132. However, in other embodiments, the doublers 176, 182 may have any other suitable configuration, such as by defining a rectangular cross-sectional shape with a generally constant cross-sectional thickness.

It should also be appreciated that, in several embodiments, the doublers 176, 182 may comprise pre-fabricated components configured to be separately secured (e.g., using suitable adhesives and/or mechanical fasteners) to the inner and/or outer surfaces 184, 186, 178, 180 of the blade segments 102, 104 and the blade insert 106. Alternatively, the doublers 176, 182 may be formed directly onto the inner and/or outer surfaces (e.g., suitable adhesives and/or mechanical fasteners. For instance, in a particular embodiment, each doubler 176, 182 may be formed using a wet lay-up process, wherein a plurality of plies (including a reinforcement material such as glass or carbon fibers) are positioned across the inner and/or outer surfaces 184, 186, 178, 180 and a resin or other suitable matrix material is rolled over or otherwise applied to the surface of the plies and allowed to cure.

Additionally, it should be appreciated that the illustrated doubler joint may also be utilized with one or more of the components and/or features described above with reference to FIGS. 7 and 8. For example, in one embodiment, a doubler joint may be formed across a spar cap location on the blade segments 102, 104 and the blade insert 106 and a scarf joint may be formed across a trailing edge location on the blade segments 102, 104 and the blade insert 106. Additionally, in another embodiment, a leading edge insert 172 and/or shear web couplings 174 may be utilized together with the above-described doubler joint.

Moreover, one of ordinary skill in the art should readily appreciate that the blade segments 102, 104 and the blade insert 106 may be coupled together using any other suitable joint technology and/or attachment means/method known in the art and, thus, the present subject matter need not be limited to the specific examples described above with reference to FIGS. 7-9. For example, in another embodiment, the ends 128, 130 of the blade insert 106 may be tapered or recessed so that such ends 128, 130 may be received within the blade segments 102, 104 at each interface 132, 134 or vice versa. In another embodiment, suitable male/female mating features may be utilized to couple the blade insert 106 to each of the blade segments 102, 104.

It should also be appreciated that the present subject matter is also directed to a method for extending the length of a rotor blade 16. In several embodiments, the method may include dividing a rotor blade 16 at a specified location (e.g., at cut line 108) into a first blade segment 102 and a second blade segment 104, coupling a first end 128 of a blade insert 106 to a joint end 110 of the first blade segment 102 such that a first interface 132 is defined between the blade insert 106 and the first blade segment 102 and coupling a second end 130 of the blade insert 106 to a joint end 112 of the second blade segment 104 such that a second interface 134 is defined between the blade insert 106 and the second blade segment 104. Additionally, the present subject matter also discloses a method for retrofitting a rotor blade 16 of a wind turbine 10. In several embodiments, the method may include cutting the rotor blade 16 at a specified location (e.g., at cut line 108) in order to form a root segment 102 and a tip segment 106 and positioning a blade insert 106 between the root segment 102 and the tip segment 104. In other embodiments, the method for retrofitting the rotor blade 16 may include removing a section 188 of the rotor blade 16 between a blade root 20 and a blade tip 22 of the rotor blade 16 and positioning a blade insert 106 at the location of the removed section 188 of the rotor blade 16.

As indicated above, in several embodiments, a pre-existing rotor blade 16 may be divided into the first and second blade segments 102, 104 by cutting the rotor blade 16 into two separate blade sections (e.g., at the cut line 108). In such embodiments, the rotor blade 16 may generally be cut into the two separate blade sections using any suitable cutting means and/or process known in the art. For example, in one embodiment, the rotor blade 16 may be cut using any suitable hand-held cutting equipment (e.g., by using any suitable manual cutting devices, such as saws, knives, etc., and/or automatic cutting devices, such as electric or gas-powered saws, grinders, etc.) and/or using any suitable cutting machinery (e.g., an EDM machine, water jet cutting machine, etc.).

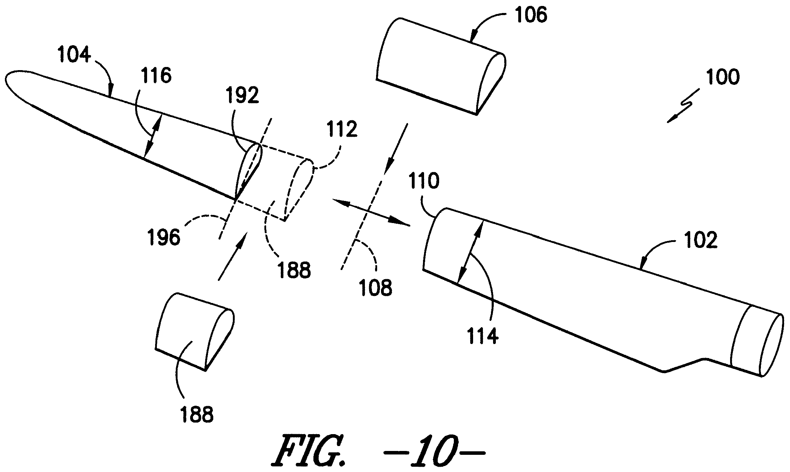

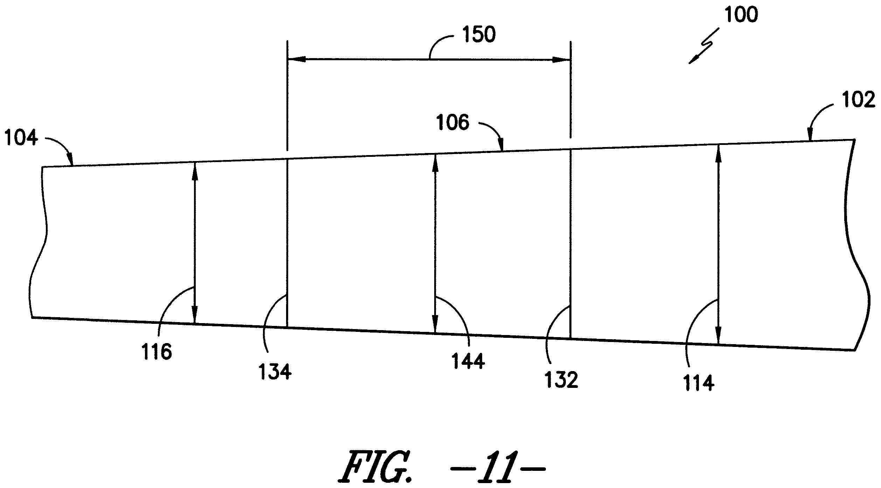

Moreover, in several embodiments, a section of a pre-existing rotor blade 16 may be removed prior to installing the blade insert 102. For example, in addition to cutting the rotor blade 16 in order to form the first and second blade segments 102, 104, further processing of one or more of the blade segments 102, 104 may also be performed prior to coupling the blade insert 106 to the blade segments 102, 104. Specifically, in one embodiment, at least a portion of the joint end(s) 110, 112 of the first and/or second blade segment 102, 104 may be removed after the rotor blade 15 is initially divided. For instance, as shown in FIG. 10, in one embodiment, the rotor blade 16 may be initially cut along the cut line 108 in order to divide the blade 16 into the first and second blade segments 102, 104. Thereafter, a section 188 of the second blade segment 104 (or, in an alternative embodiment, a section of the first blade segment 102) may be removed at its joint end 112 (e.g., by cutting the second blade segment 104 along line 192) such that the second blade segment 104 defines a new joint end 192 having a chord 116 that differs from the chord 114 defined at the joint end 110 of the first blade segment 102. In such an embodiment, it should be appreciated that, in contrast to the embodiments described above, the blade insert 106 may define a varying chord 144 along its length 150. For example, as shown in FIG. 11, the blade insert 106 may define a chord 144 at the first interface 132 that is larger than the chord 144 defined at the second interface 134. In addition, other parameters of the blade insert 106 may also be varied along its length 150, such as the body thickness 149, the aerodynamic shape/profile and/or any other suitable parameter.

It should be appreciated that the disclosed methods may also include various other method elements, such as dividing the rotor blade 16 at a specified location between about 40% to about 95% of an original span 34 of the rotor blade 16, dividing the rotor blade 16 at a specified location outboard of a maximum chord location 122 for the rotor blade 16 , dividing the rotor blade 16 at a specified location such that a center of gravity 124 of the rotor blade 16 is positioned within the first blade segment 102, forming a scarfed section 160, 162 in at least one of the first blade segment 102 or the second blade segment 104, forming a corresponding scarfed section 164, 166 in the blade insert 102, aligning the scarfed section 160, 162 of the at least one of the first blade segment 102 or the second blade segment 104 with the scarfed section 164, 166 of the blade insert 102, positioning a tapered coupling 170 across the aligned scarfed sections 160, 162, 164, 166, positioning a doubler 176, 182 across at least one of the first interface 132 or the second interface 134, positioning a leading edge insert 172 across at least one of the first interface 132 or the second interface 134 and/or coupling a shear web 148 of the blade insert 106 to a shear web 38 of the at least one the first blade segment 102 or the second blade segment 106.

It should also be appreciated that the disclosed rotor blade assembly 100 may also be modified to include a tip extension (e.g., a straight tip extension or a winglet) or a root extension in addition to the blade insert 106 coupled between the first and second blade segments.

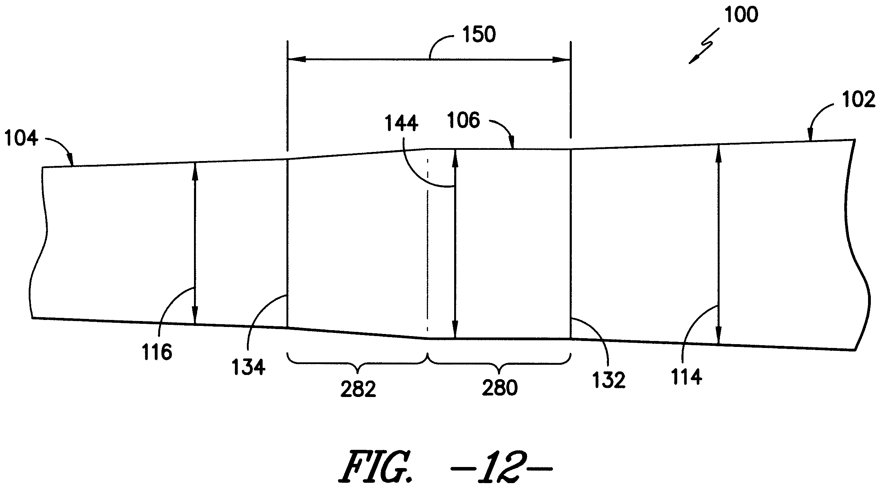

Additionally, it should be appreciated that, as an alternative to configuring the blade insert 106 such that it defines a constant cross-section along its length 150 (as shown in FIG. 4) or a continuously varying cross-section along its length 150 (as shown in FIG. 11), the blade insert 106 may also be configured to have both constant and varying cross-sections along its length 150. For instance, in several embodiments, the blade insert 106 may be configured to transition from a constant cross-section to a varying cross-section between the first and second interfaces 132, 134. Specifically, as shown in FIG. 12, in one embodiment, the blade insert 106 may transition along its length 150 from a constant portion 280, wherein the blade insert 106 defines a constant chord 144 and/or a constant aerodynamic shape/profile, to a varying portion 282, wherein the blade insert 106 defines a varying chord 144 and/or a varying aerodynamic shape/profile. As shown in the illustrated embodiment, the constant portion 280 extends from the first interface 132 and the varying portion 282 extends from the second interface 134. However, in an alternative embodiment, the blade insert 106 may be configured such that the varying portion 282 extends from the first interface 132 and the constant portion 280 extends from the second interface 134.

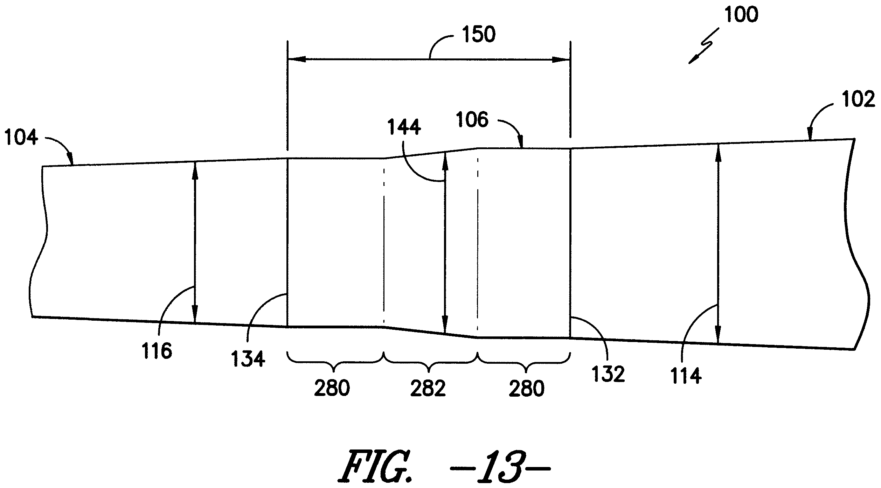

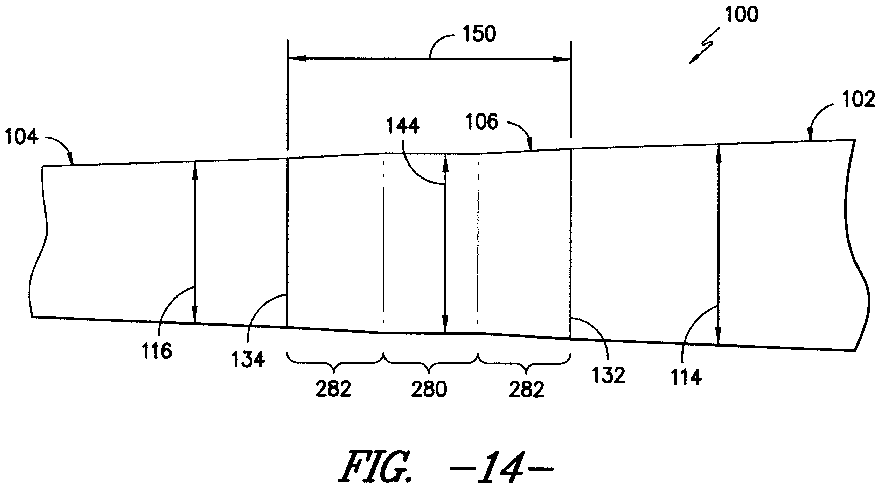

Moreover, in further embodiments, the blade insert 106 may be configured to transition from a constant cross-section to a varying cross-section at more than one location along its length 150. For instance, as shown in FIG. 13, in one embodiment, the blade insert 106 may transition from a constant portion 280 extending from the first interface 132 to a varying portion 282 and then back to a constant portion 280. Alternatively, as shown in FIG. 14, the blade insert 106 may transition from a varying portion 282 extending from the first interface 132 to a constant portion 280 and then back to a varying portion 280. It should be appreciated that, in further embodiments, the blade insert 106 may be configured to transition from a constant cross-section to a varying cross-section at three or more locations along its length 150.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims.

## Claims

1. A method for extending the length of a pre-existing rotor blade (16), the method comprising:
cutting off the pre-existing rotor blade at a specific location into a first blade segment (102) and a second blade segment (104);
coupling a first end (128) of a blade insert (106) to a first joint end (110) of the first blade segment (102) such that a first interface (132) is defined between the blade insert (106) and the first blade segment (102);
coupling a second end (130) of the blade insert (106) to a second joint end (112) of the second blade segment (104) such that a second interface (134) is defined between the blade insert (106) and the second blade segment (104);
securing one or more shear web couplings (174) to a side of respective shear webs (38,148) of blade segments (102,104) and the blade insert (106) so as to extend the shear web couplings across the first and/or second interface (132, 134), the method further comprising:
forming a scarfed section (160,162) in at least one of the first blade segment (102) or the second blade segment (104); and
forming a corresponding scarfed section (164,166) in the blade insert (106).

2. The method of claim 1, wherein the first blade segment (102) defines a first length (118) and the second blade segment (104) defines a second length (120), the first and second lengths (118,120) together defining a total segment span (34), wherein the first length (118) ranges from about 40% to about 95% of the total segment span (34).

3. The method of any preceding claim, wherein the first blade segment (102) provides a maximum chord location for the rotor blade (16).

4. The method of any preceding claim, wherein a center of gravity of the rotor blade (16) is positioned within the first blade segment (102).

5. The method of any preceding claim, wherein the blade insert (106) defines a chord, the chord at the first interface (132) being substantially equal to the chord at the second interface (134).

6. The method of any of claims 1 to 4, wherein the blade insert (106) defines a chord, the chord at the first interface (132) differing from the chord at the second interface (134).

7. The method of any preceding claim, further comprising removing at least one of a portion of the first blade segment (102) at the first joint end (110) or a portion of the second blade segment (104) at the second joint end (112).

8. The method of claim 1, further comprising aligning the scarfed section (160,162) of the at least one of the first blade segment (102) or the second blade segment (104) with the scarfed section (164,166) of the blade insert (106).

9. The method of claim 8, further comprising positioning a tapered coupling (170) across the aligned scarfed sections (160,162,164,166).

10. The method of any preceding claim, further comprising positioning a doubler (176,182) across at least one of the first interface (132) or the second interface (134).

11. The method of any preceding claim, wherein at least a portion of the blade insert (106) is formed from a material having a greater stiffness than a material used to form the first and second blade segments (102,104).

12. The method of any preceding claim, wherein the blade insert (106) has a constant stiffness between the first and second interfaces (132,134).

13. The method of any preceding claim, further comprising installing a leading edge insert (172) across the first interface (132) and/or the second interface (134) at respective leading edges (30,140) of the blade segment(s) (102,104) and the blade insert (106).

## Patentansprüche

1. Ein Verfahren zur Verlängerung der Länge eines vorher vorhandenen Rotorblatts (16), wobei das Verfahren folgendes umfasst:
Abschneiden des vorher vorhandenen Rotorblatts an einer bestimmten Stelle in ein erstes Blattsegment (102) und ein zweites Blattsegment (104);
Koppeln eines ersten Endes (128) eines Blatteinsatzes (106) mit einem ersten Verbindungsende (110) des ersten Blattsegments (102), so dass eine erste Schnittstelle (132) zwischen dem Blatteinsatz (106) und dem ersten Blattsegment (102) definiert ist;
Koppeln eines zweiten Endes (130) des Blatteinsatzes (106) mit einem zweiten Verbindungsende (112) des zweiten Blattsegments (104), so dass eine zweite Schnittstelle (134) zwischen dem Blatteinsatz (106) und dem zweiten Blattsegment (104) definiert ist;
Befestigen von einer oder mehreren Stegverbindungen (174) an einer Seite von jeweiligen Stegen (38,148) von Blattsegmenten (102,104) und dem Blatteinsatz (106), um die Stegverbindungen quer durch die erste und/oder die zweite Schnittstelle (132, 134) zu erstrecken, wobei das Verfahren folgendes umfasst:
Ausbilden von einem abgeschrägten Abschnitt (160,162) in mindestens einem von dem ersten Blattsegment (102) oder dem zweiten Blattsegment (104); und
Ausbilden von einem entsprechenden abgeschrägten Abschnitt (164,166) in dem Blatteinsatz (106).

2. Das Verfahren des Anspruchs 1, wobei das erste Blattsegment (102) eine erste Länge (118) definiert und das zweite Blattsegment (104) eine zweite Länge (120) definiert, wobei die erste und die zweite Länge (118, 120) zusammen eine gesamte Segmentspannweite (34) definieren, wobei die erste Länge (118) von ca. 40% bis ca. 95% der gesamten Segmentspannweite (34) reicht.

3. Das Verfahren von einem der vorhergehenden Ansprüche, wobei das erste Blattsegment (102) eine Stelle der maximalen Sehne für das Rotorblatt (16) bereitstellt.

4. Das Verfahren von einem der vorhergehenden Ansprüche, wobei ein Schwerpunkt des Rotorblatts (16) innerhalb des ersten Blattsegments (102) positioniert ist.

5. Das Verfahren von einem der vorhergehenden Ansprüche, wobei der Blatteinsatz (106) eine Sehne definiert, wobei die Sehne an der ersten Schnittstelle (132) im Wesentlichen der Sehne an der zweiten Schnittstelle (134) entspricht.

6. Das Verfahren von einem der Ansprüche 1 bis 4, wobei der Blatteinsatz (106) eine Sehne definiert, wobei die Sehne an der ersten Schnittstelle (132) verschieden von der Sehne an der zweiten Schnittstelle (134) ist.

7. Das Verfahren von einem der vorhergehenden Ansprüche, weiterhin umfassend das Entfernen von mindestens einem Teil des ersten Blattsegments (102) am ersten Verbindungsende (110) oder einem Teil des zweiten Blattsegments (104) am zweiten Verbindungsende (112).

8. Das Verfahren des Anspruchs 1, weiterhin umfassend das Ausrichten des abgeschrägten Abschnitts (160,162) des mindestens einen von dem ersten Blattsegment (102) oder dem zweiten Blattsegment (104) auf den abgeschrägten Abschnitt (164,166) des Blatteinsatzes (106).

9. Das Verfahren des Anspruchs 8, weiterhin umfassend das Positionieren von einer verjüngten Verbindung (170) quer durch die ausgerichteten abgeschrägten Abschnitte (160,162,164,166).

10. Das Verfahren von einem der vorhergehenden Ansprüche, weiterhin umfassend das Positionieren eines Verdopplers (176,182) quer durch mindestens eine von der ersten Schnittstelle (132) oder der zweiten Schnittstelle (134).

11. Das Verfahren von einem der vorhergehenden Ansprüche, wobei mindestens ein Teil des Blatteinsatzes (106) aus einem Material besteht, das eine höhere Steifigkeit als ein Material hat, das zur Ausbildung des ersten und des zweiten Blattsegments (102,104) verwendet wird.

12. Das Verfahren von einem der vorhergehenden Ansprüche, wobei der Blatteinsatz (106) eine konstante Steifigkeit zwischen der ersten und der zweiten Schnittstelle (132,134) hat.

13. Das Verfahren von einem der vorhergehenden Ansprüche, weiterhin umfassend das Montieren von einem Vorderkanteneinsatz (172) quer durch die erste Schnittstelle (132) und/oder die zweite Schnittstelle (134) an jeweiligen Vorderkanten (30,140) des Blattabschnitts bzw. der Blattabschnitte (102,104) und des Blatteinsatzes (106).

## Revendications

1. Un procédé d'allongement de la longueur d'une pale de rotor (16) pré-existante, le procédé comprenant :
couper la pale de rotor pré-existante dans un emplacement spécifié en un premier segment de pale (102) et un second segment de pale (104) ;
coupler une première extrémité (128) d'un insert de pale (106) à une première extrémité de jonction (110) du premier segment de pale (102) de manière qu'une première interface (132) est définie entre l'insert de pale (106) et le premier segment de pale (102) ;
coupler une seconde extrémité (130) de l'insert de pale (106) à une seconde extrémité de jonction (112) du second segment de pale (104) de manière qu'une seconde interface (134) est définie entre l'insert de pale (106) et le second segment de pale (104) ;
fixer un ou plusieurs accouplements d'âme de cisaillement (174) à un côté d'âmes de cisaillement respectives (38,148) de segments de pale (102,104) et l'insert de pale (106) de manière à allonger les accouplements d'âmes de cisaillement à travers la première et/ou la seconde interface (132, 134), le procédé comprenant en outre :
former une section en biseau (160,162) dans au moins un du premier segment de pale (102) ou du second segment de pale (104) ; et
former une section en biseau correspondante (164,166) dans l'insert de pale (106).

2. Le procédé de la revendication 1, dans lequel le premier segment de pale (16) définit une première longueur (118) et le second segment de pale (104) définit une seconde longueur (120), les longueurs première et seconde (118,120) définissant conjointement une envergure de segment (34) totale, dans lequel la première longueur (118) est comprise d'environ 40 % à environ 95 % de l'envergure de segment (34) totale.

3. Le procédé de l'une quelconque des revendications précédentes, dans lequel le premier segment de pale (102) fournit un emplacement de corde maximale pour la pale de rotor (16).

4. Le procédé de l'une quelconque des revendications précédentes, dans lequel un centre de gravité de la pale de rotor (16) est positionné dans le premier segment de pale (102).

5. Le procédé de l'une quelconque des revendications précédentes, dans lequel l'insert de pale (106) définit une corde, la corde à la première interface (132) étant essentiellement égale à la corde à la seconde interface (134).

6. Le procédé de l'une quelconque des revendications 1 à 4, dans lequel l'insert de pale (106) définit une corde, la corde à la première interface (132) différant de la corde à la seconde interface (134).

7. Le procédé de l'une quelconque des revendications précédentes, comprenant en outre enlever au moins l'une d'une partie du premier segment de pale (102) à la première extrémité de jonction (110) ou d'une partie du second segment de pale (104) à la seconde extrémité de jonction (112).

8. Le procédé de la revendication 1, comprenant en outre aligner la section en biseau (160,162) de l'au moins un parmi le premier segment de pale (102) ou le second segment de pale (104) avec la section en biseau (164,166) de l'insert de pale (106).

9. Le procédé de la revendication 8, comprenant en outre positionner un accouplement effilé (170) à travers les sections en biseau alignées (160,162,164,166).

10. Le procédé de l'une quelconque des revendications précédentes, comprenant en outre positionner un doubleur (176,182) à travers au moins l'une de la première interface (132) ou de la seconde interface (134).

11. Le procédé de l'une quelconque des revendications précédentes, dans lequel au moins une partie de l'insert de pale (106) est formée en un matériau ayant une raideur plus haute qu'un matériau utilisé pour former les segments de pale premier et second (102,104).

12. Le procédé de l'une quelconque des revendications précédentes, dans lequel l'insert de pale (106) a une raideur constante entre les interfaces première et seconde (132,134).

13. Le procédé de l'une quelconque des revendications précédentes, comprenant en outre installer un insert de bord d'attaque (172) à travers la première interface (132) et/ou la seconde interface (134) dans de respectifs bords d'attaque (30,140) du(des) segment(s) de pale (102,104) et l'insert de pale (106).
